(19) Europäisches Patentamt

European Patent Office

Office européen des brevets

(11) **EP 0 933 235 B1**

(12) **EUROPEAN PATENT SPECIFICATION**

(45) Date of publication and mention
of the grant of the patent:
**11.05.2005 Bulletin 2005/19**

(51) Int Cl.⁷: **B60C 11/12**, B60C 11/11,
B60C 11/13

(21) Application number: **99300651.9**

(22) Date of filing: **28.01.1999**

(54) **Pneumatic tire**

Luftreifen

Bandage pneumatique

(84) Designated Contracting States:
**DE ES FR GB IT**

(30) Priority: **28.01.1998 JP 1586498**

(43) Date of publication of application:
**04.08.1999 Bulletin 1999/31**

(73) Proprietor: **BRIDGESTONE CORPORATION**
**Tokyo 104-0031 (JP)**

(72) Inventor: **Shibata, Ken'nichi**
**Chuo-ku, Tokyo 104-0031 (JP)**

(74) Representative: **Whalley, Kevin**
**Marks & Clerk**
**90 Long Acre**
**London WC2E 9RA (GB)**

(56) References cited:
**EP-A- 0 864 448          DE-A- 1 480 945**
**DE-A- 19 543 940          US-A- 4 598 747**
**US-A- 5 833 779**

• **PATENT ABSTRACTS OF JAPAN vol. 1997, no. 11, 28 November 1997 (1997-11-28) & JP 09 183303 A (SUMITOMO RUBBER IND LTD), 15 July 1997 (1997-07-15)**
• **PATENT ABSTRACTS OF JAPAN vol. 1997, no. 08, 29 August 1997 (1997-08-29) & JP 09 094829 A (BRIDGESTONE CORP), 8 April 1997 (1997-04-08)**
• **PATENT ABSTRACTS OF JAPAN vol. 1998, no. 02, 30 January 1998 (1998-01-30) & JP 09 277805 A (TOYO TIRE &AMP;RUBBER CO LTD), 28 October 1997 (1997-10-28)**
• **PATENT ABSTRACTS OF JAPAN vol. 010, no. 211 (M-501), 24 July 1986 (1986-07-24) & JP 61 050805 A (SUMITOMO RUBBER IND LTD), 13 March 1986 (1986-03-13)**

**Description**

BACKGROUND OF THE INVENTION

Field of the Invention

The present invention relates to a pneumatic tire exhibiting an excellent performance on wet surfaces even in an abraded condition.

Description of the Related Art

Heretofore, sipes have been formed on blocks formed on a tread surface (a part that contacts road surfaces) of a tire to exhibit an advantageous effect on the property of the tire on wet surfaces. The sipe formed on a block substantially increases the length of the edge and breaks thin water layers on road surfaces to secure gripping ability of the tire (the edge effect). The performance of the tire on wet surfaces is kept excellent due to this effect.

This kind of a pneumatic tire shows a decrease in gripping ability with abrasion because of rubber degradation. The water-removing performance of the sipe also decreases with abrasion because of a decrease in the volume of the sipe.

On the other hand, the edge length of the block remains the same because the length of the sipe exposed at the tread surface of the block does not change with abrasion. Therefore, the edge effect is the same in a new tire and in an abraded tire.

Thus, the pneumatic tire has a problem in that while the edge effect remains the same in a new tire and in an abraded tire, rubber degradation and a decrease in water-removing performance of the sipe take place with abrasion and the performance of the pneumatic tire on wet surfaces deteriorates.

A tire with an increasing length of the sipe when the tire gets abrased is disclosed in JP-09-183303 A. Also a tire according to the preamble of claim 1 is disclosed in US-A-4598747.

SUMMARY OF THE INVENTION

An object of the present invention is to solve the above problem of conventional tires and to provide a pneumatic tire that can maintain stable performance on wet surfaces even in an abraded condition.

The present invention relates to a pneumatic tire according to claim 1.

In accordance with the first aspect of the present invention, in the pneumatic tire of the present invention, the length of the sipe exposed at the surface of the tread increases with the process of abrasion. Therefore, the edge effect increases due to this gradual increase in the length of the sipe, and a decrease in gripping ability of the pneumatic tire due to rubber degradation and other factors can be suppressed. Thus, the pneumatic tire of the present invention can exhibit excellent performance on wet surfaces even in an abraded condition.

Moreover, because the sipe is formed so as to satisfy the following equations (1) and (2), blocks can be prevented from becoming chipped, or the like, when the tires are removed from blades and molds during the tire production. As a result, efficiency of production increases.

$$(1) \qquad a = c$$

$$(2) \qquad 1{,}0 < b/d \leq 2{,}0,$$

wherein
a represents the amplitude at the tread surface
b represents the wavelength at the tread surface
c represents the amplitude at a bottom portion of the sipe and
d represents the wavelength at the bottom portion of the sipe, and the length of the sipe in a plane parallel to the surface of the tread increases toward the bottom portion of the sipe from the surface of the tread.

BRIEF DESCRIPTION OF THE DRAWINGS

Figure 1 is a plan view of a tread of a pneumatic tire according to a first embodiment of the present invention.

Figure 2 is a perspective view of a block in the tread of the tire shown in Figure 1.

Figure 3 is an explanatory view of a blade according to the first embodiment of the present invention.

Figure 4 is a plan view of the block in the tread of the tire shown in Figure 1.

Figure 5 is a perspective view of a block in the tread of the tire according to a second embodiment of the present invention.

Figure 6 is a perspective view of a block in the tread of the tire according to a third embodiment of the present invention.

Figure 7 is a perspective view of a block in the tread of a tire

Figure 8 is a perspective view of a block in the tread of a tire

Figure 9A is a plan view of the tread of the tire according to the second embodiment of the present invention in a new condition.

Figure 9B is a plan view of the tread shown in Figure 9A in a condition of 50% abrasion.

Figure 10A is a plan view of a tread of a conventional tire of a comparative example in a new condition.

Figure 10B is a plan view of the tread shown in Figure 10A in a condition of 50% abrasion.

DESCRIPTION OF THE PREFERRED EMBODIMENTS

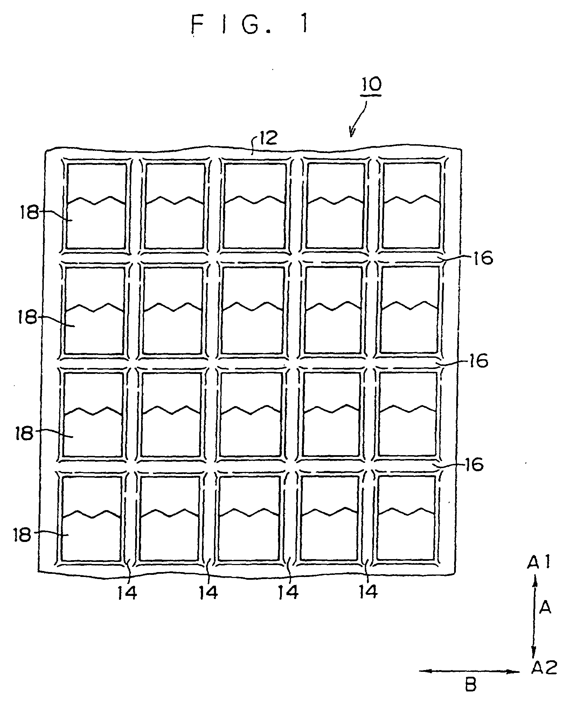

A pneumatic tire of a first embodiment of the present invention is described with reference to Figures 1 to 4.

As shown in Figure 1, a plurality of blocks 18 divided by main grooves 14 extending in the circumferential direction of the tire (the direction shown by an arrow A, which is hereinafter referred to as direction A) and lug grooves 16 extending in the transverse direction of the tire (the direction shown by an arrow B, which is hereinafter referred to as direction B) are formed in a tread 12 of a pneumatic tire 10 of the present invention.

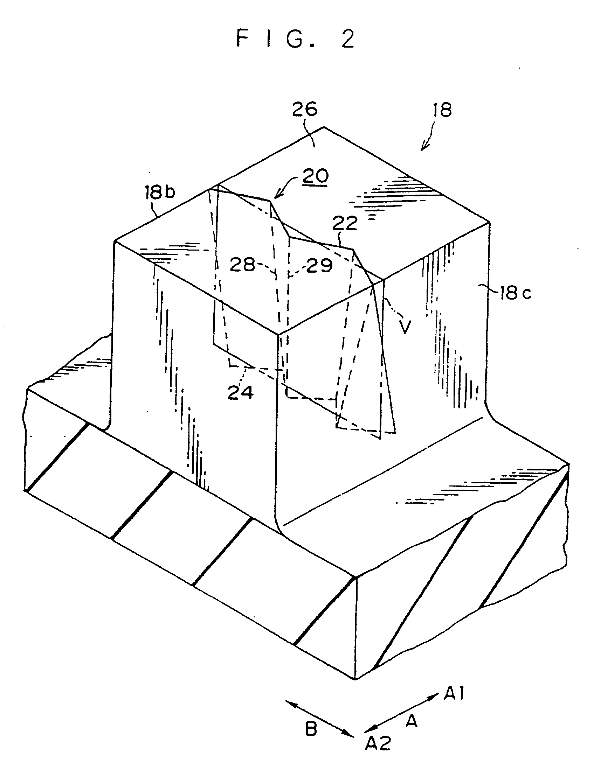

In the block 18, a sipe 20 having end portions which are open at both side faces 18b and 18c in direction B is formed, as shown in Figure 2. The shape of the sipe 20 will be described with reference to a blade 30 used for forming the sipe 20.

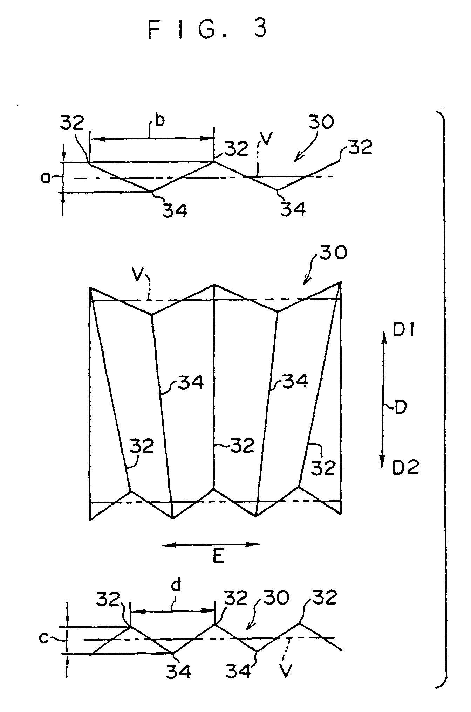

As shown in Figure 3, protruding portions 32 each having a triangular sectional shape which protrude in a first direction with respect to an imaginary central plane V when cut in a plane in parallel with the tread and protruding portions 34 each having a triangular sectional shape which protrude in a second direction opposing the first direction when cut in a plane in parallel with the tread are alternatingly formed so as to protrude with respect to the imaginary central plane V in the blade 30. In the sectional shape of the blade 30 cut in the direction shown by an arrow E (hereinafter referred to as direction E), at the end in the direction indicated by an arrow D1 (hereinafter referred to as direction D1), the protruding portions 32 and 34 are each formed so as to have a height $a/2$ with respect to the imaginary central plane V and a distance b in direction E between the peaks protruding in the first direction (or between the peaks protruding in the second direction). In the sectional shape of the blade 30 cut in direction E at the end in the direction shown by an arrow D2 (hereinafter referred to as direction D2), the protruding portions 32 and 34 are each formed with a height $c/2$ with respect to the imaginary central plane V and a distance **d** in direction E between the peaks protruding in the first direction (or between the peaks protruding in the second direction).

The sum of the heights of the peaks of two adjacent protruding portions 32 and 34 (hereinafter, referred to as the amplitude) at both end portions in direction D, i.e., **a** and **c**, satisfy the relation a=c The distance between two adjacent protruding portions 32, 32 in the first direction (or two adjacent protruding portions 34, 34 in the second direction) along the imaginary central plane V (hereinafter, referred to as the wavelength) at both end portions in direction D, i.e., **b** and **d**, satisfy the relation b>d. It is preferable that a and c satisfy the relation a=c and **b** and **d** satisfy the relation 1.0<b/d≤2.0 When the relation between **a** and **c** and the relation between **b** and **d** are outside the above ranges, there is the possibility of the block being chipped when the tire is removed from the blade 30 of a mold.

Therefore, when the sectional shape of the blade **30** cut in direction E is observed continuously from the end portion in direction D1 toward the end portion in direction D2, the wavelength of the blade 30 having a zig-zag shape decreases (**b**→**d**). Since the amplitude remains the same between the end portions in both directions D1 and D2 (**a=c**), the length of the blade 30 in the sectional shape cut in direction E increases with the decrease in the wavelength.

The blade 30 which has been formed as described above is disposed in a mold in such a manner that the imaginary central plane V (direction E) is placed parallel to direction B, the end portion in direction D1 is placed at the tread surface (a part that contacts road surfaces) and the end portion in direction D2 is placed at the bottom of the sipe. The mold thus prepared is used for vulcanization. In this way, the sipe 20 is formed in the block 18.

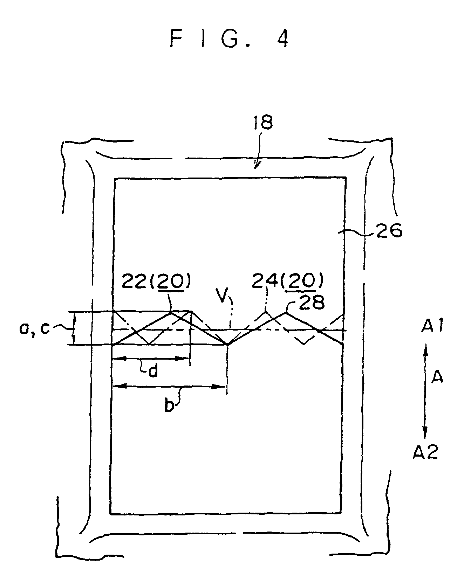

The sipe 20 has a shape in which, in the same manner as in the blade 30, protruding portions 28 and 29 are alternatingly formed so as to respectively protrude in directions A1 and A2 from the imaginary plane V, which is placed parallel with direction B, each protruding portions 28 and 29 having a triangular shape in cross-section when cut by a plane parallel to the tread. In other words, as indicated in Figures 2 and 4, the sipe 20 includes a surface portion 22, in which the triangular protruding portions 28 and 29 alternatingly formed so as to respectively protrude in directions A1 and A2 have a wavelength b and an amplitude a at the tread surface 26 when the tire is new, and a bottom portion 24, in which triangular protruding portions 28 and 29 alternatingly formed so as to respectively protrude in directions A1 and A2 have a wavelength d and amplitude c (=a). The sipe 20 having this structure is formed so as to be continuous from the surface portion 22 to the bottom portion 24. Namely, in a plane parallel to the tread surface 26, the length of the sipe 20 gradually increases from the surface portion 22 toward the bottom portion 24.

When the pneumatic tire having the above structure is used in an actual automobile, the following effect can be exhibited.

When the tire is new, the sipe 20 exposed at the tread surface 26 has a zig-zag shape having the wavelength **b** and the amplitude **a**. This sipe has a longer edge than a sipe having a shape of a straight line in direction B, and the tire having this sipe has a greater gripping ability on wet surfaces.

The wavelength of the sipe 20 exposed at the tread surface 26 gradually decreases with abrasion(**b**→**d**). Because the amplitude of the sipe 20 remains constant, the length of the sipe (edge) gradually increases, thereby increasing the edge effect. Therefore, a decrease in gripping ability of the pneumatic tire 10 caused by rubber degradation and a decrease in water-removing performance (due to a decrease in the volume of the sipe) can be suppressed.

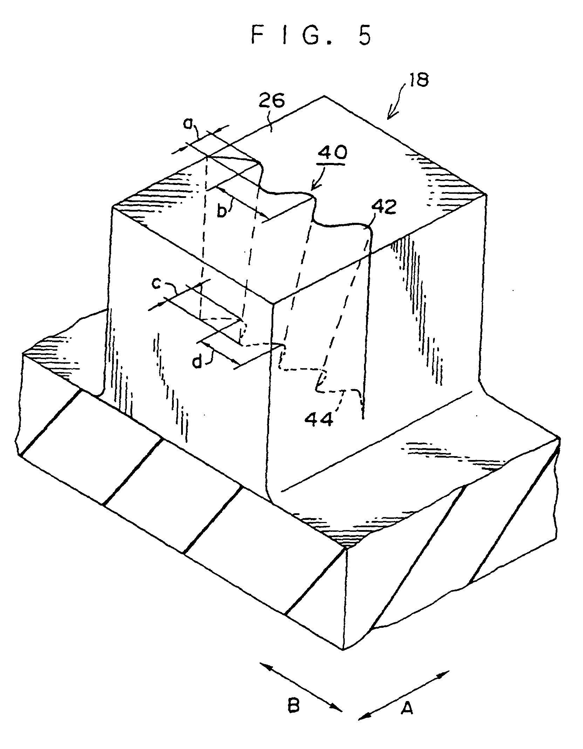

Next, other embodiments of the pneumatic tire of the present invention are described with reference to Figures 5 to 6. Elements which are the same as those used in the pneumatic tire of the first embodiment are referred to with the same numbers and characters as those used above and detailed descriptions of such elements will be omitted.

The block 18 in the pneumatic tire 10 of a second embodiment is shown in Figure 5. In this tire, a sipe 40 has a shape of a sine curve rather than the zig-zag shape described above. For example, when the sine curve at the surface portion 42 at the tread surface 26 is a line expressed by (**a**/2)sin θ, the sine curve at the bottom portion 44 is a line expressed by (**c**/2)sin (4/3 × θ) and these two lines are connected to each other continuously from the surface portion 42 to the bottom portion 44. In other words, these two lines are formed in such a manner that the wavelength decreases toward the bottom portion 44.

In this embodiment, the amplitudes **a** and **c** at the surface portion 42 and at the bottom portion 44, respectively, and the wavelengths b and d at the surface portion 42 and at the bottom portion 44, respectively, satisfy the following relation: **a**=**c** and **b**/**d**=4/3.

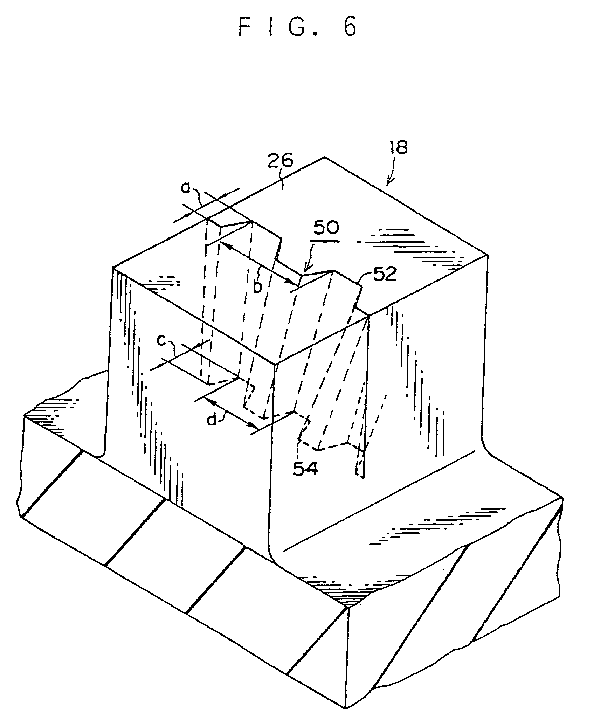

The block 18 in the pneumatic tire 10 of a third embodiment is shown in Figure 6. In this tire, a sipe 50 has a shape of a trapezoid. In this case, the amplitudes **a** and **c** at a surface portion 52 and at a bottom portion 54, respectively, and the wavelengths **b** and **d** at the surface portion 52 and at the bottom portion 54, respectively, satisfy the following relation: **a**=**c** and **b**>**d**.

The sipes 40 and 50 in the second embodiment and in the third embodiment, respectively, each have a construction in which the wavelength of the sine curve or the trapezoid decreases toward the bottom portions 44 and 54, respectively, of the sipes (**b**→**d**), while the amplitude is kept constant (**a**=**c**).

In the pneumatic tire 10 in which the blocks 18 having the sipe 40 or 50 are provided at the tread surface, the length of the sipe (the edge) 40 or 50, respectively, gradually increases with the process of abrasion because the wavelength of the sipe 40 or 50, respectively, exposed at the tread surface 26 decreases. Therefore, the edge effect increases with the process of abrasion and a decrease in gripping ability (the performance on wet surfaces) caused by rubber degradation and other factors is suppressed. The following fourth and fifth embodiments are not part of the invention and therefore they are not covered by the claims. These embodiments are only for a better understanding of the invention

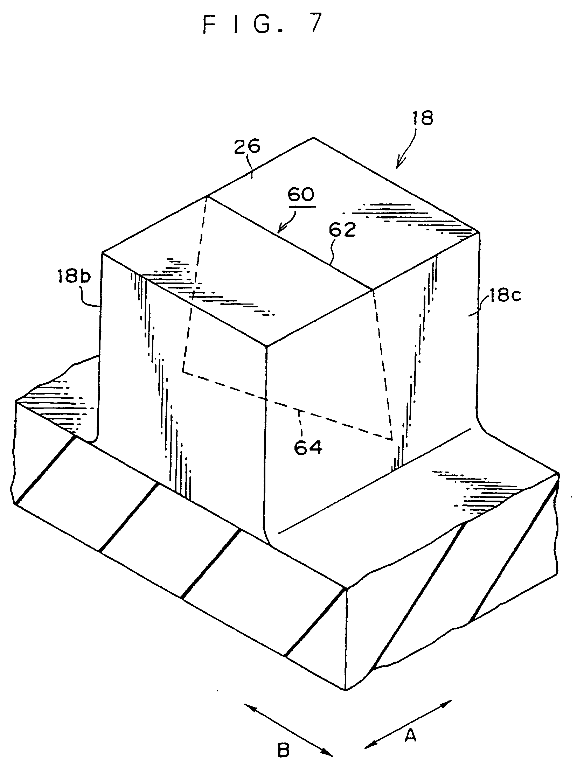

The block 18 in the pneumatic tire 10 of a fourth embodiment is shown in Figure 7. The block has a sipe 60 which has two end portions open at the side faces 18b and 18c, respectively. This sipe 60 has a construction in which a surface portion 62 having a shape of a straight line parallel with direction B at the tread surface 26 and a bottom portion 64 having a shape of a straight line inclined a specific angle from direction B at the bottom portion of the sipe are connected to each other continuously from the surface portion 62 to the bottom portion 64. In other words, the sipe 60 has a construction in which the angle from direction B in the plan view from the tread surface 26 increases toward the bottom portion 64 from the surface portion 62. Therefore, the length of the sipe 60 increases from the surface portion 62 toward the bottom portion 64.

In the pneumatic tire 10 in which the blocks 18 having the sipe 60 are formed on the surface of the tread, the length of the sipe (the edge) 60 exposed at the tread surface 26 increases with the process of abrasion. The edge effect increases with the process of abrasion and a decrease in gripping ability of the tire caused by rubber degradation or other factors is thus suppressed.

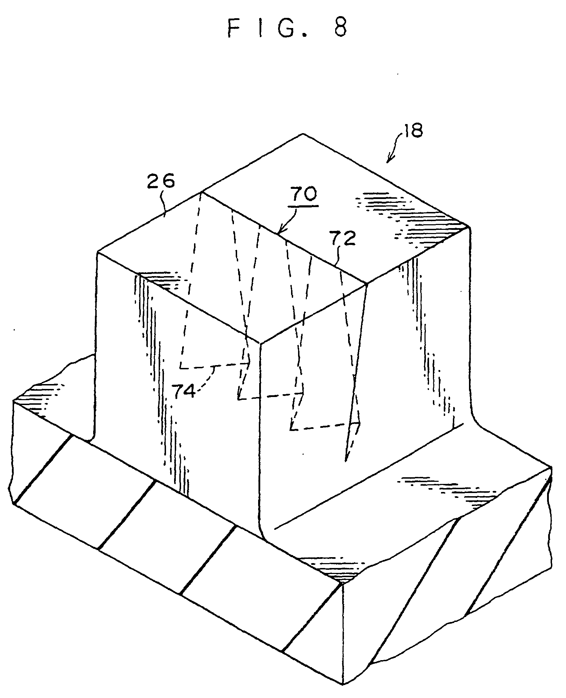

The block 18 in the pneumatic tire 10 of a fifth embodiment is shown in Figure 8. In this tire, a sipe 70 has a construction in which a surface portion 72 having a shape of a straight line parallel to direction B at the tread surface 26 and a bottom portion 74 having a zig-zag shape at the bottom of the sipe are connected to each other continuously from the surface portion 72 to the bottom portion 74.

If the sipe at the surface portion 72 having a shape of a straight line is regarded as a line having an amplitude **a** of **0** and a wavelength **b** and the sipe at the bottom portion 74 having a zig-zag shape is regarded as a zig-zag line having an amplitude **c** and a wavelength **b,** this is a construction in which **b** is equal to **d** while the amplitude alone increases (**a**(=0)→**c**).

In the pneumatic tire 10 in which the blocks 18 having the sipe 70 are formed at the tread surface, the length of the sipe (the edge) 70 increases with the process of abrasion because the amplitude of the sipe 70 exposed at the tread surface 26 increases. Therefore, the edge effect increases with the process of abrasion and a decrease in gripping ability of the tire caused by degradation of rubber and other factors is suppressed.

In order to confirm the above advantageous effect exhibited by the pneumatic tire of the present invention, a brake test on a wet surface was conducted as follows, wherein the tires used therefore do not form part of the present invention

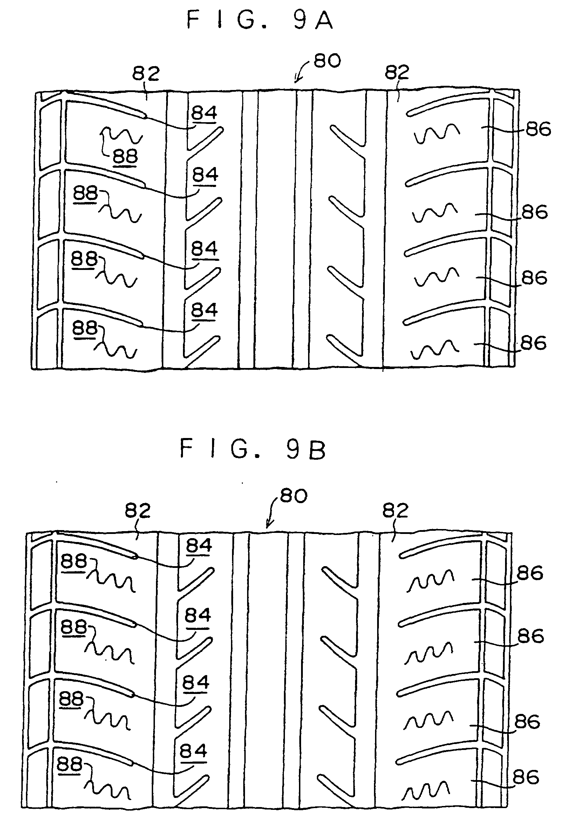

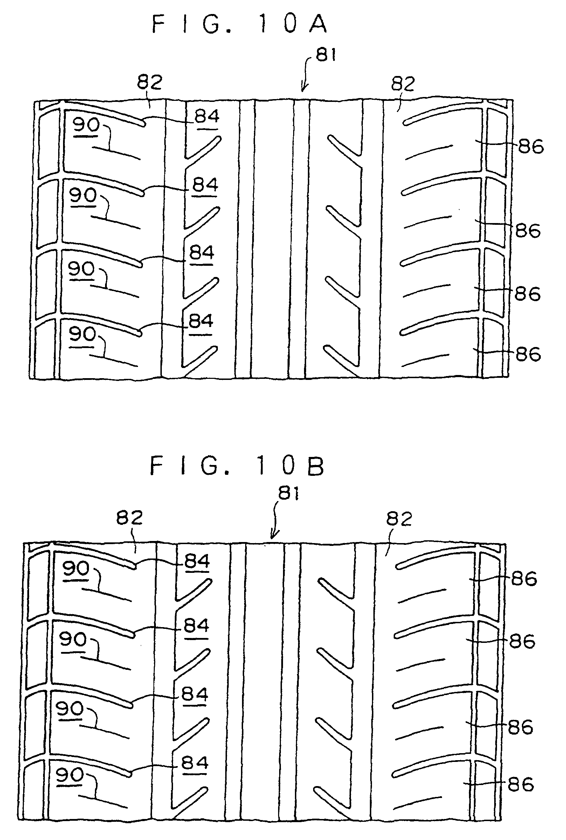

The brake test was carried out by utilizing an embodiment tire 80 and a comparative example tire 81, like those indicated in Figs. 9 and 10, respectively. The tire 80 and 81 each had a size 185/70R14. In the tire 80 and the tire 81, sipes 88 and 90 were formed, respectively, on small blocks 86 divided by lug grooves 84, in shoulder ribs 82 formed on the tread surface thereof.

The sipes 88 formed in the tire 80 had a shape of a sine curve in substantially the same manner as that of the second embodiment (refer to Fig. 5). Each sipe 88 was formed in such a manner that the amplitude increased slightly and the wavelength decreased, from the tread surface toward the bottom of the sipe. The size of the sipe 88 in the tire 80 is shown in Table 1.

The sipes 90 formed on the comparative example tire 81 had a shape of a straight line on the tread surface and the shape was kept the same from the tread surface to the bottom of the sipe. The depth of the sipe was the same as that of the tire 80.

Table 1

|  | **a** | **b** | **c** | **d** | Depth of main groove | Depth of sipe |
|---|---|---|---|---|---|---|
| tire (mm) | 2 | 10 | 2.5 | 6 | 7.5 | 6 |

Pneumatic tires having the above constructions were attached to an automobile. The automobile was driven at a speed of 80 km/h on an asphalt road covered with water at a depth of 2 mm. The automobile was rapidly braked and the distance before stopping was measured. The inverse of the obtained value was expressed as an index of brake performance on wet surfaces. The index of brake performance on wet surfaces obtained by a new tire was set as 100 for both the tire 80 and the comparative example tire 81. The results of the test are shown in Table 2.

Table 2

|  | Performance on wet surfaces | |
|---|---|---|
|  | New tire | At 50% abrasion |
| Comparative example tire | 100 | 90 |
| tire | 100 | 95 |

As can be seen with the above results, the length of the sipe 88 exposed at the tread surface of the embodiment tire in a state of 50% abrasion is long in comparison to the length when the tire is new, and thereby the edge effect is increased and a decrease in gripping ability, caused by a decrease in water-removing performance or the like, which in turn depends on rubber degradation or a decrease in the volume of the sipe, is suppressed.

In summary, when the pneumatic tire of the present invention is used, the length of the sipe exposed at the surface of the tread increases with abrasion. Therefore, a decrease in the performance on wet surfaces caused by a decrease in water-removing performance or the like, which is in turn caused by rubber degradation or a decrease in the volume of the sipe, can be suppressed.

**Claims**

**1.** A pneumatic tire (10) comprising:

a tread (12), and

a plurality of sipe-including block-shaped land portions (18) provided at a tread surface (26) and divided by main grooves (14) extending in a circumferential direction of the tire and by lug grooves (16) intersecting the main grooves, wherein

each sipe (20;40;50) has a form in which first protruding portions (28) which protrude in a first direction along the circumferential direction of the tire and second protruding portions (29) which protrude in a second direction opposite to the first direction are alternately formed at sides of an imaginary central plane (V) extending in a transverse direction of the tire and in a direction of the depth of the sipe, and **characterized in that** when the wavelength is defined as one of a peak distance between two adjacent first protruding portions and a peak distance between two adjacent second protruding portions along the imaginary central plane and the amplitude is defined as the maximum peak distance between an adjacent first protruding portion and second protruding portion in a direction perpendicular to the imaginary central plane, the wavelength and the amplitude satisfy a relation expressed by the following equations (1) and (2):

$$a = c \tag{1}$$

$$1.0 < b/d \leq 2.0 \tag{2},$$

wherein a represents the amplitude at the tread surface
b represents the wavelength at the tread surface
c represents the amplitude at a bottom portion
d represents the wavelength at the bottom portion, and
the edge length of the sipe in a plane parallel to the tread surface increases from the tread surface toward the bottom portion of the sipe.

2. A pneumatic tire as claimed in claim 1, **characterized in that** each sipe (20) has a form in which first triangular portions (28) which protrude in a first direction along the circumferential direction of the tire and second triangular portions (29) which protrude in a second direction opposite to the first direction are alternatingly formed at sides of an imaginary central plane (V) extending in a transverse direction of the tire and in a direction of the depth of the sipe, and **in that** the wavelength is defined as one of a peak distance between two adjacent first triangular portions and a peak distance between two adjacent second triangular portions along the imaginary central plane and the amplitude is defined as the maximum peak distance between an adjacent first triangular portion and second triangular portion in a direction perpendicular to the imaginary central plane.

3. A pneumatic tire as claimed in claim 1, **characterized in that** each sipe (40) has a form in which first protruding portions which each protrude in a first direction along the circumferential direction of the tire and have a shape that is substantially a sine curve (sin θ, 0<θ<π) and second protruding portions which each protrude in a second direction opposite to the first direction and have the shape that is substantially the sine curve (sin θ, 0<θ<π) are alternatingly formed at sides of an imaginary central plane extending in a transverse direction of the tire and in a direction of the depth of the sipe, said first protruding portions and said second protruding portions being connected to form a shape that is substantially a sine curve.

4. A pneumatic tire as claimed in claim 1, **characterized in that** each sipe (50) has a form in which first trapezoidal portions which protrude in first direction along the circumferential direction of the tire and second trapezoidal portions which protrude in a second direction opposite to the first direction are alternatingly formed at sides of an imaginary central plane extending in a transverse direction of the tire and in a direction of the depth of the sipe, and **in that** the wavelength is defined as one of a peak distance between two adjacent first trapezoidal portions and a peak distance between two adjacent second trapezoidal portions along the imaginary central plane and the amplitude is defined as the maximum peak distance between an adjacent first trapezoidal portion and second trapezoidal portion in a direction perpendicular to the imaginary central plane.

**Patentansprüche**

1. Luftreifen (10) umfassend:

ein Reifenprofil (12), und

eine Vielzahl von Lamellierungen beinhaltenden, blockförmigen Stegabschnitten (18), welche auf der Lauffläche (26) vorgesehen sind, und durch sich in Umfangsrichtung des Reifens erstreckende Hauptrillen (14) und durch die Hauptrillen schneidende Stollenrillen (16) unterteilt werden, wobei

jede Lamellierung (20; 40; 50) eine Form aufweist, in welcher erste hervorspringende Abschnitte (28), die in einer ersten Richtung entlang der Umfangsrichtung des Reifens vorspringen, und zweite vorspringende Abschnitte (29), die in einer zweiten Richtung entgegengesetzt der ersten Richtung hervorspringen, abwechseln an den Seiten einer imaginären mittleren Ebene V gebildet sind, welche sich in einer Querrichtung des Reifens und in Richtung der Tiefe der Lamellierung erstreckt, und

**dadurch gekennzeichnet, dass**
wenn die Wellenlänge als entweder ein Scheitelabstand zwischen zwei benachbarten ersten vorspringenden Abschnitten oder ein Scheitelabstand zwischen zwei benachbarten zweiten vorspringenden Abschnitten entlang der imaginären mittleren Ebene definiert ist und die Amplitude als maximaler Scheitelabstand zwischen einem benachbarten ersten vorspringenden Abschnitt und einem zweiten vorspringenden Abschnitt in einer zur imaginären mittleren Ebene senkrechten Richtung definiert wird, erfüllen die Wellenlänge und die Amplitude ein durch die folgenden Gleichungen (1) und (2) ausgedrücktes Verhältnis:

$$a = c \tag{1}$$

$$1{,}0 < b/d \leq 2{,}0 \tag{2},$$

wobei a die Amplitude der Lauffläche darstellt
b die Wellenlänge der Lauffläche darstellt
c die Amplitude eines unteren Abschnitts darstellt
d die Wellenlänge am unteren Abschnitt darstellt, und
die Kantenlänge der Lamellierung in einer zur Lauffläche parallelen Ebene sich von der Lauffläche zum unteren Abschnitt der Lamellierung hin vergrößert.

2. Luftreifen nach Anspruch 1, **dadurch gekennzeichnet, dass** jede Lamellierung (20) eine Form aufweist, in der erste dreieckige Abschnitte (28), die in einer ersten Richtung entlang der Umfangsrichtung des Reifens hervorspringen, und zweite dreieckige Abschnitte (29), die in einer zweiten Richtung entgegengesetzt der ersten Richtung hervorspringen, abwechselnd an den Seiten einer imaginären mittleren Ebene V gebildet sind, die sich in einer Querrichtung des Reifens und in einer Richtung der Tiefe der Lamellierung erstreckt, und **dadurch** dass die Wellenlänge als entweder ein Scheitlabstand zwischen zwei benachbarten ersten dreieckigen Abschnitten oder ein Scheitelabstand zwischen zwei benachbarten zweiten dreieckigen Abschnitten entlang der imaginären mittleren Ebene definiert ist und die Amplitude als der maximale Scheitelabstand zwischen einem benachbarten ersten dreieckigen Abschnitt und zweiten dreieckigen Abschnitt in einer zur imaginären mittleren Ebene senkrechten Richtung definiert ist.

3. Luftreifen nach Anspruch 1, **dadurch gekennzeichnet, dass** jede Lamellierung (40) eine Form aufweist, in der erste vorspringende Abschnitte, die jeweils in einer ersten Richtung entlang der Umfangsrichtung des Reifens hervorspringen, und eine Form haben, die im wesentlichen eine Sinuskurve (sin θ, 0< θ < π) ist, und zweite vorspringende Abschnitte, die jeweils in einer zweiten Richtung entgegengesetzt der ersten Richtung hervorspringen, und eine Form haben, die im wesentlichen die Sinuskurve ist (sin θ, 0< θ < π), abwechselnd an den Seiten einer imaginären mittleren Ebene gebildet sind, die sich in einer Querrichtung des Reifens und in einer Richtung der Tiefe der Lamellierung erstreckt, wobei die ersten vorspringenden Abschnitte und die zweiten vorspringenden Abschnitte verbunden sind, um eine Form zu bilden, die im wesentlichen eine Sinuskurve ist.

4. Luftreifen nach Anspruch 1, **dadurch gekennzeichnet, dass** jede Lamellierung (50) eine Form aufweist, in der erste trapezoidale Abschnitte, die in einer ersten Richtung entlang der Umfangsrichtung des Reifens hervorspringen, und zweite trapezoidale Abschnitte, die in einer zweiten Richtung entgegengesetzt der ersten Richtung hervorspringen, abwechselnd an den Seiten einer imaginären mittleren Ebene gebildet sind, die sich in einer Querrichtung des Reifens und in einer Richtung der Tiefe der Lamellierung erstreckt, und **dadurch** dass die Wellenlänge als entweder ein Scheitelabstand zwischen zwei benachbarten ersten trapezoidalen Abschnitten oder ein Scheitelabstand zwischen zwei benachbarten zweiten trapezoidalen Abschnitten entlang der imaginären mittleren Ebene definiert ist und die Amplitude als der maximale Scheitelabstand zwischen einem ersten trapezoidalen Abschnitt und einem benachbarten zweiten trapezoidalen Abschnitt in einer zur imaginären mittleren Ebene senkrechten Richtung definiert ist.

**Revendications**

1. Pneumatique (10) comprenant :

   une bande de roulement (12), et
   une pluralité de parties formant portées (18) en forme de blocs incluant des fentes et prévues sur une surface (26) de bande de roulement et divisées par des rainures principales (14) qui s'étendent dans une direction circonférentielle du pneumatique et par des rainures de blocs (16) croisant les rainures principales, dans lequel chaque fente (20;40;50) possède une forme dans laquelle des premières parties saillantes (28), qui font saillie dans une première direction le long de la direction circonférentielle du pneumatique, et des secondes parties saillantes (29), qui font saillie dans une seconde direction opposée à la première direction, sont formées alternativement sur des côtés d'un plan central imaginaire (V) s'étendant dans une direction transversale du pneumatique et dans le sens de la profondeur de la fente, et **caractérisé en ce que**
   si la longueur d'ondulation est définie comme l'une d'une distance entre sommets de deux premières parties saillantes adjacentes ou d'une distance entre sommets de deux secondes parties saillantes adjacentes le long du plan central imaginaire et si l'amplitude est définie comme étant la distance maximale entre les sommets d'une première partie saillante et d'une seconde partie saillante adjacentes dans une direction perpendiculaire au plan central imaginaire, la longueur d'ondulation et l'amplitude satisfont à une relation exprimée par les équations suivantes (1) et (2) :

$$a = c \qquad\qquad (1)$$

$$1,0 < b/d \leq 2,0 \qquad\qquad (2),$$

   dans lesquelles
   a représente l'amplitude au niveau de la surface de la bande de roulement,
   b représente la longueur d'ondulation au niveau de la surface de la bande de roulement,
   c représente l'amplitude au niveau d'une partie de fond,
   d représente la longueur d'ondulation au niveau de la partie de fond, et
   la longueur de bord de la fente dans un plan parallèle à la surface de la bande de roulement augmente depuis la surface de la bande de roulement en direction de la partie de fond de la fente.

2. Pneumatique selon la revendication 1, **caractérisé en ce que** chaque fente (20) possède une forme, dans laquelle des premières parties triangulaires (28), qui font saillie dans une première direction le long de la direction circonférentielle du pneumatique, et des secondes parties triangulaires (29), qui font saillie dans une seconde direction opposée à la première direction, sont formées alternativement sur des côtés d'un plan central imaginaire (V) s'étendant dans une direction transversale du pneumatique et dans une direction de profondeur de la fente, et **en ce que** la longueur d'ondulation est définie comme étant l'une d'une distance entre sommets de deux premières parties triangulaires adjacentes ou d'une distance entre sommets de deux secondes parties triangulaires adjacentes le long du plan central imaginaire, et l'amplitude est définie comme étant la distance maximale entre sommets d'une première partie triangulaire et d'une seconde partie triangulaire adjacentes dans une direction perpendiculaire au plan central imaginaire.

3. Pneumatique selon la revendication 1, **caractérisé en ce que** chaque fente (40) possède une forme, dans laquelle les premières parties saillantes, qui font saillie chacune dans une première direction dans la direction circonférentielle du pneumatique et possèdent une forme qui est sensiblement une courbe sinusoïdale (sin θ, 0<θ<π), et les secondes parties saillantes, qui font saillie chacune dans une seconde direction opposée à la première direction et possèdent la forme qui est sensiblement la courbe sinusoïdale (sin θ, 0<θ<π) sont formées alternativement sur des côtés d'un plan central imaginaire s'étendant dans une direction transversale du pneumatique et dans une direction de la profondeur de la fente, lesdites premières parties saillantes et lesdites secondes parties saillantes étant raccordées de manière à réaliser une forme qui est sensiblement une courbe sinusoïdale.

4. Pneumatique selon la revendication 1, **caractérisé en ce que** chaque fente (50) possède une forme dans laquelle des premières parties trapézoïdales, qui font saillie dans une première direction le long de la direction circonférentielle du pneumatique, et des secondes parties trapézoïdales, qui font saillie dans une seconde direction opposée à la première direction, sont formées alternativement sur des côtés d'un plan central imaginaire qui s'étend dans une direction transversale du pneumatique et dans une direction de la profondeur de la fente, et **en ce que** la longueur d'ondulation est définie comme étant l'une d'une distance entre les sommets de deux premières parties trapézoïdales adjacentes ou d'une distance entre sommets de deux secondes parties trapézoïdales adjacentes le long du plan central imaginaire, et l'amplitude est définie comme étant la distance maximale entre sommets d'une première partie trapézoïdale et d'une seconde partie trapézoïdale adjacentes dans une direction perpendiculaire au plan central imaginaire.

# F I G . 1

F I G. 2

# F I G . 3

F I G . 4

F I G. 5

F I G. 6

F I G. 7

F I G . 8

F I G. 9 A

F I G. 9 B

# FIG. 10A

# FIG. 10B